**Europäisches Patentamt**

**European Patent Office**

**Office européen des brevets**

(19)

(11) Veröffentlichungsnummer: **0 530 535 A2**

## (12) EUROPÄISCHE PATENTANMELDUNG

(21) Anmeldenummer: **92113513.3**

(22) Anmeldetag: **07.08.92**

(51) Int. Cl.5: **C08L 71/12**, C08L 25/06, C08L 25/08

(30) Priorität: **23.08.91 DE 4127978**

(43) Veröffentlichungstag der Anmeldung:
**10.03.93 Patentblatt 93/10**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Zeltner, Doris, Dr.**
**Viehtriftstrasse 94**
**W-6725 Roemerberg(DE)**
Erfinder: **Weiss, Robert, Dr.**
**Bruesseler Ring 53**
**W-6700 Ludwigshafen(DE)**
Erfinder: **Seelert, Stefan, Dr.**
**Albrecht-Duerer-Ring 23a**
**W-6710 Frankenthal(DE)**

(54) **Thermoplastische Formmassen mit verbesserter multiaxialer Zähigkeit.**

(57) Thermoplastische Formmassen enthaltend

| | |
|---|---|
| A) 5 bis 94 Gew.-% | eines Polyphenylenethers, |
| B) 5 bis 94 Gew.-% | eines schlagfest modifizierten vinylaromatischen Polymeren, |
| C) 1 bis 10 Gew.-% | eines vernetzten Polymeren mit einer Glasübergangstemperatur oberhalb von $0^0$ C, enthaltend 2,5 bis 15 Gew.-% mindestens eines Monomeren mit mindestens zwei copolymerisierbaren Doppelbindungen. |

EP 0 530 535 A2

Rank Xerox (UK) Business Services
(3.10/3.5x/3.0.1)

Die Erfindung betrifft thermoplastische Formmassen enthaltend

| A) 5 bis 94 Gew.-% | eines Polyphenylenethers, |
|---|---|
| B) 5 bis 94 Gew.-% | eines schlagfest modifizierten vinylaromatischen Polymeren, |
| C) 1 bis 10 Gew.-% | eines vernetzten Polymeren mit einer Glasübergangstemperatur oberhalb von $0^0$C, enthaltend 2,5 bis 15 Gew.-% mindestens eines Monomeren mit mindestens zwei copolymerisierbaren Doppelbindungen. |

Thermoplastische Formmassen aus Polyphenylenethern und schlagzähem Polystyrol sind seit langem bekannt. In der EP-A-305 764 werden entsprechende flammgeschützte thermoplastische Formmassen beschrieben, welche neben einem Flammschutzmittel noch ein hochmolekulares, vernetztes Polystyrol zur Verbesserung des Flammschutzes enthalten. Der Gewichtsanteil des Vernetzers beträgt in diesem Polystyrol maximal 2 %.

Für die Verwendung der thermoplastischen Formmassen zur Herstellung von Formkörpern ist insbesondere ihre Zähigkeit von Bedeutung. Der Fachmann sucht daher ständig nach Möglichkeiten die Zähigkeit zu verbessern.

Aufgabe der vorliegenden Erfindung waren daher thermoplastische Formmassen aus Polyphenylenether und schlagzähen Polystyrol mit verbesserter Zähigkeit.

Demgemäß wurden die thermoplastischen Formmassen gemäß Anspruch 1 gefunden.

Die in den erfindungsgemäßen Formmassen enthaltenen Polyphenylenether A) sind an sich bekannt. Die Polyphenylenether A) sind in den erfindungsgemäßen Formmassen in Mengen von 5 bis 94, bevorzugt 15 bis 80 und insbesondere 30 bis 70 Gew.-% enthalten.

Es handelt sich um Verbindungen auf Basis von substituierten, insbesondere disubstituierten Polyphenylenethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether, Poly-(2,6-dichlor-1,4-phenylenether), Poly(2-methyl-6-phenyl-1,4-phenylenether), Poly(2,6-dibenzyl-1,4-phenylenether), Poly(2-ethoxi-1,4-phenylenether), Poly(2-chlor-1,4-phenylenether), Poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly-(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure, Maleinsäureanhydrid, Styrol, Methylstyrol, Vinyltoluol oder Chlorstyrol modifiziert bzw. gepfropft sind.

Derartige Polyphenylenether sind u.a. in der WO 87/00540 beschrieben.

Hinsichtlich der physikalischen Eigenschaften der Polyphenylenether werden solche bevorzugt, die eine Grenzviskosität von 0,18 bis 0,7 dl/g, gemessen in Chloroform bei $25^0$C, aufweisen. Das entspricht in etwa einem Molekulargewicht von 8 000 bis 60 000.

Die Bestimmung der Molekulargewichtsverteilung erfolgte nach der GPC-Methode mit Shodex-Trennsäulen 0,8*50 cm vom Typ A803, A804 und A805 mit THF als Elutionsmittel bei Raumtemperatur. Die Lösung der PPE-Proben in THF erfolgt unter Druck bei 110°C; injiziert werden 0,160 ml einer 0,25 %igen Lösung. Die Detektion erfolgte mit einem UV-Detektor.

Als vinylaromatische Polymere der Komponenten B) kommen vorzugsweise solche Polymere in Betracht, die mit den eingesetzten Polyphenylenether verträglich sind.

Das Molekulargewicht dieser Polymeren liegt im allgemeinen im Bereich von 1 500 bis 2 000 000, vorzugsweise im Bereich von 70 000 bis 1 000 000 und besonders bevorzugt im Bereich zwischen 150 000 und 300 000.

Beispiele für bevorzugte, mit Polyphenylenethern verträgliche vinylaromatische Polymere sind der Monographie von O. Olabisi, Polymer-Polymer Miscibility, 1979, S. 224 bis 230 und 245 zu entnehmen.

Es können auch Copolymerisate verschiedener vinylaromatischer Monomere eingesetzt werden.

Unter vinylaromatischen Polymeren sollen auch solche verstanden werden, die geringe Mengen, z. B. unter 40 insbesondere unter 10 Gew.-% nicht vinylaromatischer Monomere einpolymerisiert enthalten.

Bevorzugt sind jedoch vinylaromatische Polymere, welche ausschließlich oder nahezu ausschließlich aus vinylaromatischen Monomeren aufgebaut sind.

Als vinylaromatische Monomere sind bevorzugt solche mit 8 bis 12 C-Atomen in Betracht zu ziehen.

Zu nennen sind insbesondere Styrol, ferner die kern- oder seitenkettenalkylierten Styrole, z. B. Chlorstyrol, $\alpha$-Methylstyrol, p-Methylstyrol, Vinyltoluol und p-tert.-Butylstyrol. Vorzugsweise wird jedoch Styrol verwendet, gegebenenfalls mit untergeordneten Mengen der genannten anderen vinylaromatischen Monomere als Comonomere.

Das vinylaromatische Polymer kann nach den bekannten Verfahren in Masse, Lösung oder Suspension hergestellt werden (Ullmanns Encyclopädie der Technischen Chemie, Band 19, Seiten 265 bis 272, Verlag Chemie, Weinheim 1980).

Die Schlagzähmodifizierung kann dann durch Zumischen von 3 bis 30 Gew.-%, bezogen auf das vinylaromatische Polymere, eines Acrylatkautschuks oder eines Polymerisats eines konjugierten Diens wie Butadien oder Isopren erreicht werden. Die Dienpolymerisate können teilweise oder vollständig hydriert sein. Der Kautschuk bzw. das Dienpolymerisat sollten eine Glastemperatur von unter $0^0$C, gemessen nach K.H. Illers und H. Breuer, Kolloid Zeitschrift 176 (1961), S. 110, aufweisen. Geeignet sind übliche Kautschuke wie Polybutadienkautschuk, Acrylatkautschuk, Styrolbutadienkautschuk, hydrierter Styrolbutadienkautschuk, Acrylnitrilbutadienkautschuk, Polyisoprenkautschuk, EPDM-Kautschuke, Kautschuke mit inneren Gruppen, Styrolbutadienblockcopolymere vom AB-, ABA- und ABAB-Typ einschließlich AB-, ABA-, ABA' und ABAB-verschmiert-(taper) Block-Copolymere, Stern-Block-Copolymere und ähnliche, anaoge Isoprenblockpolymerisate, wie sie an sich aus EP-A 62 283 bekannt sind. Derartige synthetische Kautschuke sind dem Fachmann geläufig und zusammenfassend in "Ullmanns Encyklopädie der Technischen Chemie", 4. Auflage, Band 13, Seiten 595 bis 634, Verlag Chemie GmbH, 1977, beschrieben.

Die Schlagzähmmodifizierung wird in bevorzugter Weise dadurch bewerkstelligt, daß die vinylaromatischen Polymeren in Gegenwart von 3 bis 30 Gew.-%, bezogen auf das vinylaromatische Polymere, eines kautschukartigen Polymerisats insbesondere auf Basis eines konjugierten Diens oder eines Acrylatkautschuks, durch Suspensionspolymerisation hergestellt werden (HIPS). Kautschukartige Polymerisate auf der Basis von Butadien, insbesondere mit einem Butadiengehalt von mindestens 30 Gew.-% z.B. Styrol-Butadien-Polymerisate, Polybutadien und ferner Butadien-Styrol-Blockcopolymerisate sind besonders geeignet.

Die Komponente C) ist in den erfindungsgemäßen thermoplastischen Formmassen in Mengen von 1 bis 10, bevorzugt 2 bis 8 und besonders bevorzugt 2 bis 7 Gew.-% enthalten.

Es handelt sich dabei um ein vernetztes Polymer mit einer Glasübergangstemperatur über $0^0$C, insbesondere über $50^0$C und besonders bevorzugt über $80^0$C. Die Glasübergangstemperatur läßt sich nach üblichen Methoden wie der Differentialthermoanalyse oder Differential Scanning Calorimetrie (s. Z.B. ASTM 3418/82, sog. "midpoint temperature") bestimmen.

Der Gewichtsanteil an vernetzenden Monomeren mit mindestens zwei copolymerisierbaren Doppelbindungen beträgt 2,5 bis 15, insbesondere 2,5 bis 10 Gew.-%. Geeignet sind neben Monomeren mit konjugierten Doppelbindungen insbesondere vernetzende Monomere mit nicht konjugierten Doppelbindungen wie Divinylbenzol, Diallylmaleat, Diallylfumarat, Diallylphthalat, Triallylcyanurat, Triallylisocyanurat, Tricyclodecenyl-(meth)-acrylat und Allyl-(meth)-acrylate. Bevorzugt sind Divinylbenzol und Diallylphthalat.

Bei den sonstigen Monomeren des vernetzten Polymeren kann es sich insbesondere um die bereits oben genannten vinylaromatischen Monomere, vor allem um Styrol, sowie um weitere nicht vinylaromatische Monomere, z.B. (Meth-)acrylnitril, $C_1$-$C_4$-Methacrylate, insbesondere Methylmethacrylat und in untergeordneten Mengen auch um Alkylacrylate, Vinylether oder Vinylester handeln.

Als besonders geeignet haben sich vernetzte Polymere C) erwiesen, die

| | |
|---|---|
| 40 bis 97,5 Gew.-% | eines vinylaromatischen Monomeren, |
| 0 bis 57,5 Gew.-% | eines weiteren Monomeren und |
| 2,5 bis 15 Gew.-% | mindestens eines Monomeren mit mindestens zwei nicht konjugierten copolymerisierbaren Doppelbindungen |

enthalten. Ganz besonders bevorzugt enthält das vernetzte Polymer neben dem vernetzenden Monomeren nur noch vinylaromatische Monomere.

Die Komponente C) kann durch übliche Polymerisationsverfahren, wie Emulsions-, Suspension- oder Mikrosuspensionspolymerisation hergestellt werden.

Bevorzugt erfolgt die Herstellung durch Emulsionspolymerisation.

Die Monomeren bzw. Monomerengemische können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate.

Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Die Monomeren bzw. Monomerengemische können bei der Emulsionspolymerisation auch stufenweise zudosiert werden, so daß das Emulsionspolymerisat einen mehrstufigen Aufbau (Kern, Hülle) hat. Das vernetzende Monmere wird jedoch bevorzugt so zugegeben, daß es statistisch im gesamten Emulsionspolymerisat eingebaut wird.

Die mittlere Teilchengröße ($d_{50}$-Wert der integralen Massenverteilung) des Emulsionspolymerisats beträgt bevorzugt 50 bis 300 nm, insbesondere 70 bis 200 nm.

Die erfindungsgemäßen thermoplastischen Formmassen können noch weitere Zusatzstoffe, z.B. mineralische Verstärkungsmaterialien, wie Glaskugeln, Mineralfasern, Whisker, Glimmer oder insbesondere Glasfasern in Mengen von bis zu 30 Gew.-%, bezogen auf 100 Gew.-% der Summe der Bestandteile der Formmasse enthalten.

Weiterhin kommen z.B. noch Flammschutzmittel, Hitze- und Lichtstabilisatoren, Gleit- und Entformungsmittel, Färbemittel, wie Farbstoffe und Pigmente in üblichen Mengen als Zusatzstoffe in Betracht.

Als Flammschutzmittel sind insbesondere phosphorhaltige Verbindungen, wie Phosphorsäureester, Phosphinsäureester, Phosphinoxide, Phosphonsäuresalze, Phosphonsäureester und roter Phosphor, sowie Gemische dieser Substanzen von Bedeutung. Bevorzugt sind Triphenylphosphinoxid und Triphenylphosphat, sowie Gemische dieser Substanzen.

Die Herstellung der erfindungsgemäßen thermoplastischen Formmassen erfolgt zweckmäßigerweise durch Mischen der Komponenten bei Temperaturen im Bereich von 200 bis 350°C, vorzugsweise 250 bis 300°C in üblichen Mischvorrichtungen, wie z.B. Knetern, Banbury-Mischern und Einschnekkenextrudern, vorzugsweise in einem Zweischneckenextruder. Um eine möglichst homogene Formmasse zu erhalten, ist eine intensive Durchmischung notwendig, was in bekannter Weise erreicht werden kann. Die Verweilzeiten liegen im wesentlichen im Bereich von 0,5 bis 30 min, vorzugsweise von 1 bis 5 min. Die Reihenfolge des Mischens der Komponenten kann variiert werden, es können ausgewählte Komponenten vorgemischt sein oder es können auch alle Komponenten gemeinsam gemischt werden.

Die erfindungsgemäßen Formmassen eignen sich gut zur Herstellung von Formteilen aller Art, z.B. durch Spritzguß oder Extrusion. Weiterhin dienen sie zur Herstellung von Folien und Halbzeug im Tiefzieh- oder Blasverfahren.

Die erfindungsgemäßen Formmassen zeichnen sich aus durch eine gute multiaxiale Zähigkeit. Ein Maß für diese Zähigkeit ist die Durchstoßarbeit $W_{ges}$, welche nach DIN 53 443 mit dem Durchstoßtest ermittelt wird.

Bei erfindungsgemäßen Formmassen, welche ein Polyphenylenether mit einem Molekulargewicht zwischen 8 000 und 30 000, entsprechend einer intrinsischen Viskosität von ca. 0,18 bis 0,45, enthalten, wurde zusätzlich festgestellt, daß bei der Verarbeitung, z.B. im Spritzgußverfahren bei 280 bis 320°C, eine stark verminderte Geruchsentwicklung auftrat.

Beispiele

In den Beispielen und Vergleichsbeispielen wurden die folgenden Komponenten eingesetzt:

Komponente A:

A(1):    Poly-2,6-dimethyl-1,4-phenylenether mit einem mittleren Molekulargewicht ($M_w$) von 16 000.
A(2):    Poly-2,6-dimethyl-1,4-phenylenether mit einem mittleren Molekulargewicht ($M_w$) von 24000.
A(3):    Poly-2,6-dimethyl-1,4-phenylenether mit einem mittleren Molekulargewicht ($M_w$) von 40 000.

Komponente B:

B(1): Schlagfestes Polystyrol® KR 2710 der BASF AG mit 7,9 Gew.-% Polybutadien, mittlere Teilchengröße (d₅₀-Wert) 5,5 $\mu$m, Zellteilchenmorphologie.

B(2): Schlagfestes Polystyrol® 525 K der BASF AG mit 9 Gew.-% Polybutadien, mittlere Teilchengröße (d₅₀-Wert) 0,3 $\mu$m, Kapselteilchenmorphologie.

Komponente C:

C(1): Zur Herstellung wurden 3350 g dest. $H_2O$, 6,7 g Kaliumpersulfat, 8,4 g Natriumhdrogencarbonat und 83,3 g K 30 (Natriumalkylsulfonat der Bayer AG) auf 65$^0$C erhitzt und nach Zugabe von 20,9 g Styrol und 1,3 g Divinylbenzol 15 min gerührt. Innerhalb von 3 h wurde eine Mischung von 2066 g Styrol und 132 g Divinylbenzol zugetropft und anschließend wurde noch 2 h nachgerührt. Dann wurde nochmals 1 g Kaliumpersulfat zugegeben und 1 h bei 70$^0$C gerührt. Nach dem Abkühlen wurde das Produkt ausgefällt und getrocknet. Der Gehalt an Vernetzer entsprach 6 Gew.-%, die mittlere Teilchengröpe betrug 0,13 $\mu$m.

C(2): Das Produkt wurde analog C(1) hergestellt, jedoch wurden insgesamt 89 g Diallylphthalat (4 Gew.-%) als Vernetzer eingesetzt. Das Polymere wies eine mittlere Teilchengröße von 0,12 $\mu$m auf.

C(3): Das Produkt wurde analog C(1) hergestellt, jedoch wurden insgesamt 9 g Divinylbenzol (0,4 Gew.-%) als Vernetzer eingesetzt. Der Wert der mittleren Teilchengröße betrug 0,13 $\mu$m.

Die Herstellung der Formmassen erfolgte auf einem Einwellen-Extruder bei ca. 280°C Gehäusetemperatur.

Die Probekörper wurden bei 280$^0$C spritzgegossen.

Tabelle 1: Zusammensetzung, Durchstoßarbeit $W_{ges}$ und Durchstoßlänge $l_{ges}$

| Beispiele | A | | B | | C | | $W_{ges}$ | $l_{ges}$ |
|---|---|---|---|---|---|---|---|---|
| | Art | [Gew.-%] | Art | [Gew.-%] | Art | [Gew.-%] | [Nm] | [mm] |
| 1 | A(3) | 30 | B(2) | 65 | C(1) | 5 | 62 | 15,1 |
| 2 | A(3) | 30 | B(2) | 65 | C(2) | 5 | 59 | 14,3 |
| 3 | A(3) | 50 | B(2) | 43 | C(1) | 7 | 64 | 16,0 |
| 4 | A(1) | 40 | B(1) | 57 | C(1) | 3 | 50 | − |
| 5 | A(3) | 40 | B(1) | 57 | C(1) | 3 | 52 | − |
| 6 | A(2) | 65 | B(1) | 28 | C(2) | 7 | 61 | − |
| 7* | A(3) | 50 | B(2) | 43 | C(3) | 7 | 46 | 11,9 |
| 8* | A(3) | 50 | B(2) | 50 | − | − | 42 | 11,2 |
| 9* | A(2) | 69,5 | B(1) | 30,5 | − | − | 35 | − |

\* zum Vergleich
Anmerkung: $l_{ges}$ wurde nicht bei allen Versuchen bestimmt.

EP 0 530 535 A2

Tabelle 2: Geruch bei Verarbeitung

| Beispiel | Geruch bei Verarbeitungstemperatur (Spritzguß)** | |
|---|---|---|
| | 280°C | 320°C |
| 4 | 2,2 | 2,8 |
| 5 | 4,2 | 5,2 |
| 6 | 2,6 | 3,0 |
| 9 | 2,4 | 3,2 |

** der Geruch wurde durch 5 verschiedene Personen nach Noten von 1 (kein Geruch) bis 6 (sehr starker Geruch) beurteilt und daraus der Mittelwert berechnet.

**Patentansprüche**

1. Thermoplastische Formmassen enthaltend

| A) 5 bis 94 Gew.-% | eines Polyphenylenethers, |
| B) 5 bis 94 Gew.-% | eines schlagfest modifizierten vinylaromatischen Polymeren, |
| C) 1 bis 10 Gew.-% | eines vernetzten Polymeren mit einer Glasübergangstemperatur oberhalb von $0^0$C, enthaltend 2,5 bis 15 Gew.-% mindestens eines Monomeren mit mindestens zwei copolymerisierbaren Doppelbindungen. |

2. Thermoplastische Formmassen nach Anspruch 1, wobei die Glasübergangstemperatur des vernetzten Polymeren C) mindestens $50^0$C beträgt.

3. Thermoplastische Formmassen nach einen der Ansprüche 1 oder 2, wobei das vernetzte Polymer C)

| 40 bis 97,5 Gew.-% | eines vinylaromatischen Monomeren, |
| 0 bis 57,5 Gew.-% | eines weiteren Monomeren und |
| 2,5 bis 15 Gew.-% | mindestens eines Monomeren mit mindestens zwei copolymerisierbaren Doppelbindungen enthält. |

4. Verwendung der thermoplastischen Formmassen nach einem der Ansprüche 1 bis 3 zur Herstellung von Formkörpern.

5. Formkörper erhältlich aus thermoplastischen Formmassen nach einem der Ansprüche 1 bis 3.